# EUROPEAN PATENT APPLICATION

(11) **EP 3 290 151 A1**
(43) Date of publication of application: **07.03.2018**
(21) Application number: 17189508.9
(22) Date of filing: 05.09.2017
(51) Int. Cl.: B23P 23/02, B23Q 9/00, F01D 25/28, B23P 6/00

(54) **METHOD AND TOOL FOR USE WITH TURBOMACHINES**

(30) Priority: 06.09.2016 US 201615257260
(71) Applicant: General Electric Company, Schenectady, NY 12345 (US)
(72) Inventor: HOLMES, James Bradford, Greenville, SC South Carolina 29615-4614 (US); HERBOLD, John William, Greenville, SC South Carolina 29615-4614 (US); CORN, Randall Stephen, Travelers Rest, SC South Carolina 29690 (US)
(74) Representative: Foster, Christopher Michael

(57) **Abstract**

A tool (1000) for drilling, tapping, and back spot facing at least one hole in a turbomachine includes a servo motor cutting device (500) configured for use with a cutting tool (530). A drill unit skid (600) is adapted to engage a hook fit slot (833) in a case of the turbomachine, and for supporting the servo motor cutting device (500), and the drill unit skid (600) including hook fit slides (640). The hook fit slides (640) guide the drill unit skid (600) along the hook fit slot (833) and act as a stop in a radial direction (103) with respect to the turbomachine. A laser positioning device (1010) detects the position of the cutting tool (530). A micro switch (1120) stops the servo motor cutting device (500) when the micro switch (1120) activates. The servo motor cutting device (500) rotates the cutting tool (530) to create the hole, while a rotor (12) of the turbomachine is left in place during drilling, tapping and back spot facing.

## Description

### BACKGROUND OF THE INVENTION

The present invention relates to turbomachines and particularly relates to a tool for repairing or upgrading components in a compressor.

In axial flow compressors, stator vanes alternate with rotating blades or buckets in the various stages of the compressor. The stator vanes are circumferentially spaced one from the other about the compressor axis and are secured to the upper and lower compressor casing halves. The upper and lower casing halves are joined one to the other at the compressor midline and provide a complete circumferential array of stator vanes for each compressor stage. As each rotating blade mounted on the rotor completes each revolution at a given rotational velocity, the rotating blade receives aerodynamic excitation pulses from each stator vane. This pulse can be generated from the wake of the upstream stator vane or the bow wave of the downstream stator vane. It is also possible to generate excitations in the rotating blade from differences between the upstream and downstream stator vane counts. These pulses induce a vibratory response in the rotating blade that can be deleterious to the rotating blade causing failure due to high cycle fatigue.

Typically the stator vane or blade count in the upper and lower halves of the compressor casing for a given stage are equal in number to one another. For example, in an initial stage S0 of a given compressor, the blade count for the stator vanes in each of the upper and lower compressor casing halves may be 24/24. In the next stage S1, the blade count may be 22/22. The first number represents the number of stator vanes in the upper casing half and the second number represents the number of stator vanes in the lower casing half of the same stage. The total stator vane count in S0 and S1 is therefore forty-eight and forty-four stator vanes respectively. However, because of the vibratory responses of the rotating blades, non-uniform vane spacings between upper and lower casing halves have been used in the past. Thus, different and alternative upper and lower blade counts in succeeding stages have been provided to reduce or eliminate the vibratory response. For example, in one compressor, stages S0 and S1 have had vane counts of 24/23 and 23/24, respectively. These non-uniform blade counts have been used in original equipment manufacture.

There are, however, a significant number of compressors in use in the field where there is an equal number of stator vanes in the upper and lower compressor halves for given stages. Certain other compressors in the field have an unequal number of stator vanes in the upper and lower compressor halves with adjacent stages, e.g. S0 and S1, having equal numbers of blades but alternate blade counts between the upper and lower halves of the compressor casing. Changing blade counts in the field was not previously considered practical since costly removal of the rotor in the field was required.

Because the rotor is closely fitted to the middle and aft (or rearward) sections of the compressor, it is geometrically difficult to reach the areas where the blades reside or to drill, tap, and counter-bore load dam pin holes in the area desired. Additionally, the current known methods for removal of these blades increase the likelihood that the rotor, stator blades or adjacent hardware may be damaged during the removal process. Moreover, the extended reach and limited access to the stator blades being removed underneath the rotor and rotor blades creates an ergonomic issue potentially leading to operator injury.

### BRIEF DESCRIPTION OF THE INVENTION

In accordance with an aspect, a tool for drilling, tapping, and back spot facing at least one hole in a turbomachine includes a servo motor cutting device configured for use with a cutting tool. A drill unit skid is adapted to engage a hook fit slot in a case of the turbomachine and for supporting the servo motor cutting device. The drill unit skid includes hook fit slides, and the hook fit slides are configured to guide the drill unit skid along the hook fit slot and act as a stop in a radial direction with respect to the turbomachine. A laser positioning device is configured to detect the position of the cutting tool. A micro switch is configured to stop the servo motor cutting device when the micro switch activates. The servo motor cutting device rotates the cutting tool to create the at least one hole, and wherein a rotor of the turbomachine is left in place during drilling, tapping and back spot facing.

In accordance with another aspect a tool for drilling, tapping, and back spot facing at least one hole in a turbomachine is provided. The tool includes a servo motor cutting device configured for use with a cutting tool. A drill unit skid is adapted to engage a hook fit slot in a case of the turbomachine and for supporting the servo motor cutting device. The drill unit skid includes hook fit slides, and the hook fit slides guide the drill unit skid along the hook fit slot and act as a stop in a radial direction and an axial direction. A laser positioning device is configured to detect the position of the cutting tool. The servo motor cutting device rotates the cutting tool to create the at least one hole, while a rotor of the dynamoelectric machine is left in place during drilling, tapping and back spot facing.

In accordance with yet another aspect, a tool for drilling, tapping, and back spot facing at least one hole in a turbomachine is provided. The tool has a servo motor cutting device configured for use with a cutting tool. A drill unit skid is adapted to engage a hook fit slot in a case of the turbomachine and for supporting the servo motor cutting device. The drill unit skid includes hook fit slides, and the hook fit slides are configured to guide the drill unit skid along the hook fit slot and act as a stop in a radial direction. The hook fit slides act as stops in two opposing radial directions with respect to the turbomachine. A micro switch is configured to stop the servo motor cutting device when the micro switch activates. The servo motor cutting device rotates the cutting tool to create the at least one hole, while a rotor of the turbomachine is left in place during drilling, tapping and back spot facing.

### BRIEF DESCRIPTION OF THE DRAWINGS

FIG. 1 is a schematic illustration with parts broken out for clarity of the upper half of a compressor illustrating various compressor stages;
FIG. 2 is a perspective view of stage S0 and stage S1 with rotating blades or buckets therebetween, illustrating the different blade counts in the upper and lower compressor halves of these stages;
FIG. 3 is a schematic end view illustrating a compressor having an equal stator vane count in both upper and lower halves of the compressor stage; and
FIG. 4 is a schematic illustration of the removal of the upper compressor half;
FIG. 5 is a cross-sectional illustration of a tool that can be used to drill, tap, back spot face and counter-bore holes for load dam pins, according to an aspect of the present invention;
FIG. 6 is a cross-sectional illustration of a drill unit skid that may be used in conjunction with the tool of FIG. 5, according to another aspect of the present invention;
FIG. 7 is a cross-sectional illustration of the tool of FIG. 5 mounted on the drill unit skid of FIG. 6, according to a still further aspect of the present invention;
FIG. 8 is a cross-sectional illustration of the tool deployed under a rotor, according to an aspect of the present invention;
FIG. 9 is a block diagram of a power and control system that may be used in conjunction with the tools of FIG. 5 and FIG. 6, according to an aspect of the present invention;
FIG. 10 illustrates a perspective view of the tool, according to an aspect of the present invention;
FIG. 11 illustrates a perspective view of the tool, according to an aspect of the present invention;
FIG. 12 illustrates an enlarged perspective view of a laser positioning device, according to an aspect of the present invention;
FIG. 13 illustrates an enlarged perspective view of the laser positioning device, where the servo motor cutting device is raised radially upward, according to an aspect of the present invention;
FIG. 14 illustrates an enlarged perspective view of the micro switch in an activated position, according to an aspect of the present invention; and
FIG. 15 illustrates a cross-sectional view of a hook fit slot, according to an aspect of the present invention.

### DETAILED DESCRIPTION OF THE INVENTION

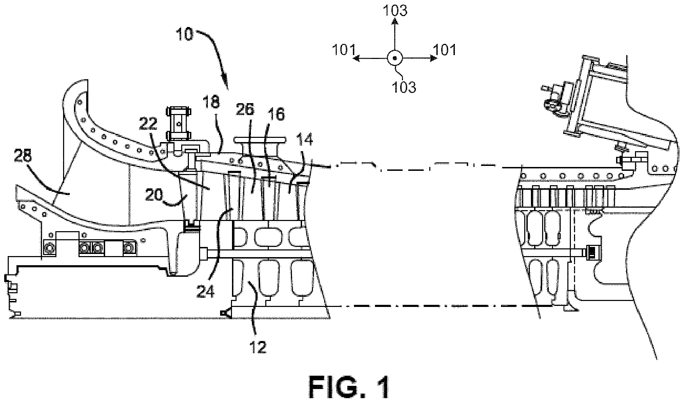

Referring to FIG. 1, there is illustrated an upper half of a compressor generally designated 10. Compressor 10 includes a rotor 12 mounting buckets or blades 14 for rotation about the axis of the compressor and stator vanes 16 fixed to the upper casing half 18. It will be appreciated that the blades 14 of the rotor are circumferentially spaced one from the other about the rotor axis and that the stator vanes 16 are similarly circumferentially spaced one from the other about the axis. The vanes and buckets form various stages of the compressor. For example, the vanes 20 and buckets 22 constitute compressor stage S0 while the vanes 24 and buckets 26 constitute stage S 1. Inlet guide vanes 28 are also illustrated in FIG. 1. The compressor has an axial axis or axial direction 101, and a radial axis or radial direction 103. The radial axis/direction 103 is perpendicular to the axial axis 101, with respect to the compressor. The axial axis 101 extends through the center of the rotor 12 of the compressor, and the radial axis/direction is in a radial plane that is perpendicular to the axial axis.

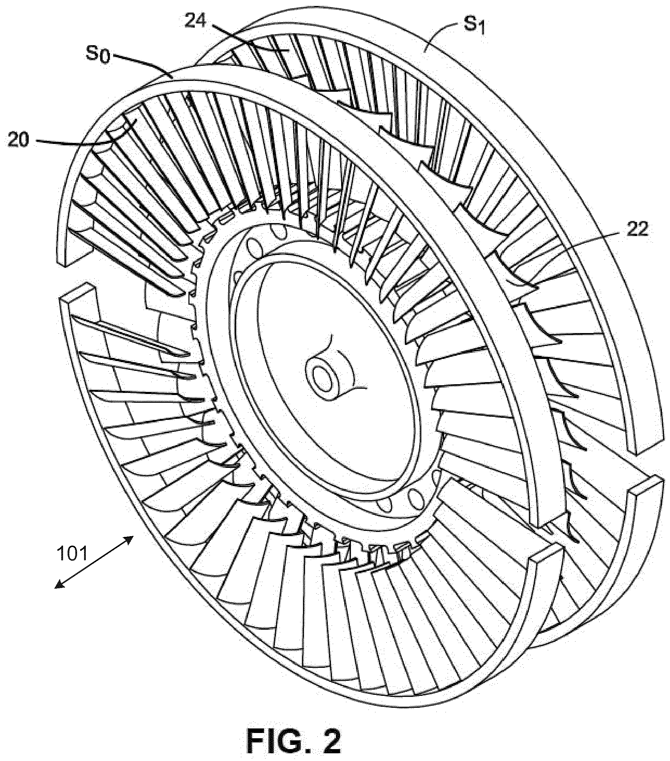

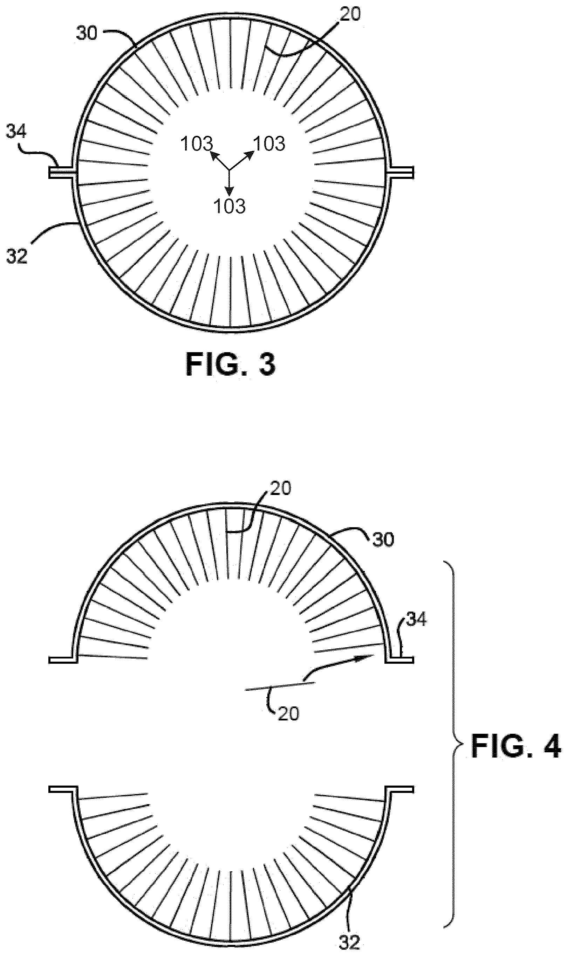

Referring to FIG. 2, there is schematically illustrated the stator vanes 20 of stage S0 and the stator vanes 24 of stage S1. The buckets 22 mounted on the rotor 12 are illustrated disposed between the stator vanes 20 and 24. The stator vanes 20 and 24 as well as stator vanes of other stages are typically attached to the upper and lower casing halves, schematically illustrated at 30 and 32 respectively in FIGS. 3 and 4. The upper and lower halves of the compressor casing may be secured at the horizontal midline to one another by bolted flanges 34 which enable the upper half 30 of the casing to be removed from the lower half 32 with the rotor retained in the lower half. The upper and lower halves of the stator vanes 20 and 24 illustrated in FIG. 2 are shown separated from one another for clarity. The axial axis (not shown) is going into and out of the page in FIGs. 3-4. The radial direction 103 originates from the axial axis 101 and extends perpendicularly to the axial axis and in all 360 degrees in the radial plane about the rotor. FIGs. 3-4 are an end view of a radial plane. It is to be understood that any reference to "axial" or "radial" is with respect to the compressor.

Compressors and their associated components may need to be repaired or upgraded during their service life. In some applications it may be desired to replace stator vanes with vanes having a new shape or profile and/or grouping configuration. Some known processes currently require the removal of the rotor, which significantly increases outage duration and cost. An apparatus, according to aspects of the present invention, utilizes an iterative process for removing single stator blades with the rotor in place. This in-situ process greatly facilitates upgrading or repairing the compressor as the previous known method required removing the rotor.

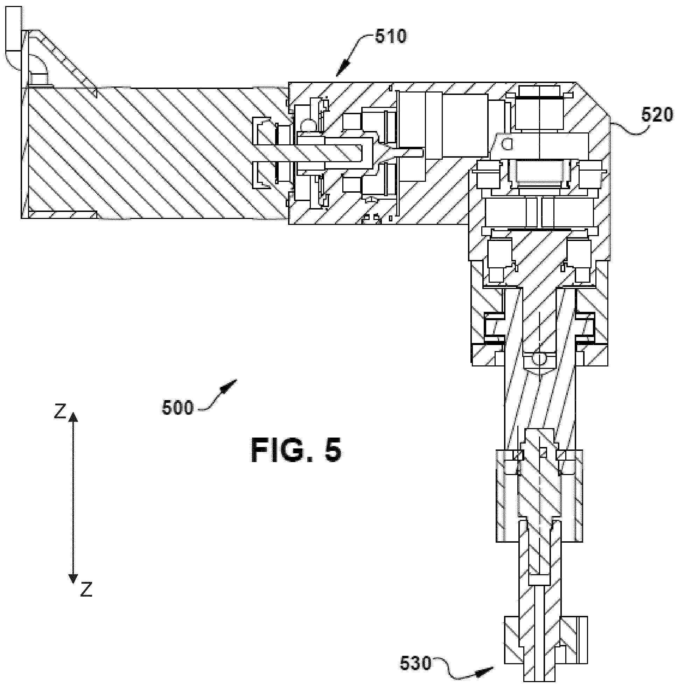

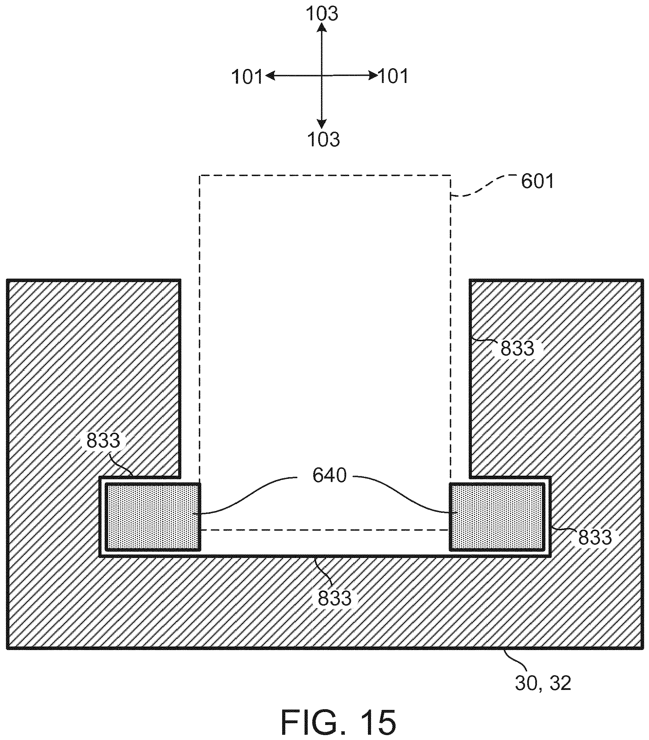

FIGS. 5-7 illustrate an apparatus, according to aspects of the present invention, that can be used to at least one of drill, tap, back spot face and counter-bore the load dam pin holes in the compressor case with the rotor in place or in-situ. The apparatus or tool may be designed to utilize the hook fit area where the blades reside to locate and navigate the tool during use. The hook fit 833 or "T" slot is an area of the compressor case that is designed to guide and hold only the stator vanes or stationary components in their relative position in the compressor. The hook fits 833 can be an array or series of circumferential grooves (facing axially forward or rearward) disposed on the inward surface of the compressor case, and span the various stages of the compressor. This hook fit can vary in size and configuration in different portions of the compressor, and may be designed to accommodate segmented as well as single blades. The hook fit 833 positions the stationary components both axially and radially (with respect to the turbomachine or compressor) for correct positioning relative to the rotating blades found on the rotor. FIG. 15 illustrates a cross-sectional view of a hook fit slot 833. The hook fit slides or feet 640 slide along the hook fit 833 and restrain the tool in a radial direction and an axial direction. The hook fit slides 640 are configured to act as stops in two opposing radial directions (up and down in FIG. 15) with respect to the turbomachine. It will be understood that the hook fit slides 640 also act as stops in two opposing axial directions as well.

After the removal of the stator vanes in the axial compressor portion of a gas turbine, load dam pins may be installed as an upgrade option. According to aspects of the present invention, the holes for the load dam pins may be drilled, tapped, back spot faced and counter-bored with the rotor in place or "in-situ' to allow for the installation of the load dam pins. The purpose of the pins is to equally distribute the aerodynamic load circumferentially at strategic locations for the stator vanes. The tool may be used with any dynamoelectric machine, including, but not limited to compressors, gas turbines or steam turbines.

FIG. 5 illustrates a cross-sectional view of a drill 500, according to an aspect of the present invention, that can be used to drill, tap, back spot face and/or counter-bore the load dam pin holes in the compressor case with the rotor in place or in-situ, thereby significantly reducing outage duration and cost. The drill 500 may utilize a motor 510 and gearbox 520 to spin a drill bit or cutting tool 530, tap, back spot face and counter-bore. The cutting tool may be a drill bit or other suitable bit for creating a hole. The motor 510 may be electrically, hydraulically or pneumatically powered. The drill 500 can use hydraulics or pneumatics (e.g., compressed air) to actuate the drill 500 in the "Z" plane or axis creating the motion to drill and penetrate the compressor case.

The drill unit 500 may be comprised of an electric servo motor 510 attached through an adaptor plate to a right angle gearbox 520. This unit provides the power to perform all cutting operations during the load drilling process. All cutting operations, drilling, back spot facing, counter boring and tapping are achieved through the use of cutting tooling connected to this drill unit. The unit may also be equipped with two hydraulic double acting cylinders that provide the forces necessary to apply pressure to the drill, spot face cutter and tap for advancing and retracting the tooling through the casing material.

In addition to the advance and retracting double acting cylinders the unit may have two hydraulic cylinders that provide the clamping force required to hold the unit radially during the drilling operations. This clamping is accomplished by actuating the cylinders to apply a radial inward force on the drill unit to hold it against the hook fit 833 during the drilling, spot facing and tapping operations. The unit may include another hydraulic cylinder that is attached to a locating or shot pin which when actuated provides the circumferential location of the drill unit by locating in the drill unit mount or in a previously drilled hole.

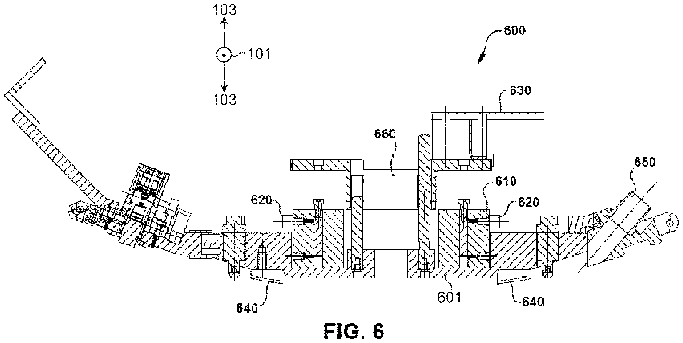

FIG. 6 illustrates a perspective view of the drill unit skid 600, which may be combined with the drill 500. The drill unit skid 600 can be used with the hook-fit slot 833 to position and retain itself in the axial direction "X" plane relative to the compressor and to accurately locate the holes in the in the desired location circumferentially in the "Y" position and relative to the horizontal joint. The drill unit skid unit 600 includes, main body 601, an air manifold 610, a number of air supply hose connections 620, a pneumatic or hydraulic drill stroke actuator 630, hook fit slides 640 and vacuum port 650. A central opening 660 is provided to accept the drill 500. The drill 500 rests on the drill stroke actuator 630 and is configured for movement in the "Z" plane or radial direction 103. The vacuum port 650 may be attached to a vacuum device and is utilized to evacuate material generated during the drilling process.

The drill unit skid 600 serves as the mounting fixture for all devices for the drill unit. Some of the notable features are the hook fit slides or feet 640 and clamping actuators. The feet 640 serve two main functions, they guide the skid 600 along the hook fit 833 and position the drill 500 in the axial direction 101 and when the clamping actuators are energized they act as a stop in the radial direction 103 to push against. The feet 640 are sized so that there is enough clearance for the sliding motion needed but not enough to allow the unit to escape the hook fit 833 in the radial or axial directions. The skid 600 may also be equipped with two attachment points for pinning the operator control/push rods 810 and the vacuum system. Loops may be located on each end of the unit to attach the control/push rods that are used by the operators to push and pull the unit along the hook fit during all operations. On the forward end the loop may be used to attach a vacuum attachment to remove cutting debris and chips generated during the various processes.

The pinning process can be accomplished by mating the rods and vacuum attachment on either end and inserting a ball pin through all pieces and thus attaching the rods and vacuum attachment to the skid. The skid also serves as an attachment point for a protective hose which houses the hydraulic lines that power the unit. This can prevent inadvertent disconnection of the hydraulic hoses from the unit and protects the hydraulic lines from nicks and scuffs during the operation of the unit.

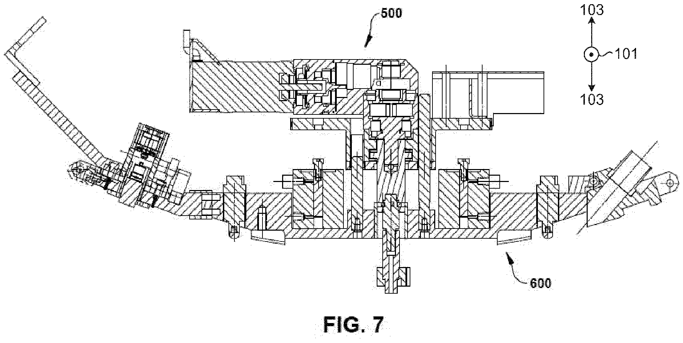

FIG. 7 illustrates a perspective view of the drill 500 mounted on drill unit skid 600. The drill 500 and skid 600 can employ a work rest to lock and retain itself in the circumferential direction while drilling, tapping, back spot facing or counter-boring and all may be executed with the rotor in place or in-situ. The combined unit may also be supplied with a control unit or programmable logic controller (PLC) (not shown). The PLC controls the cutting functions and logic for the drilling operations, and limits drilling, tapping, back spot facing and counter boring activities such as feed speeds and rotation of the drilling head based on operator selection on the operator panel (not shown). This functionality prevents undesired conditions, such as running a tap in the drill mode. The PLC may also have logic built into it to automatically pulse the drilling operation in such a way as to break the drilling into short bursts to control the length of the drill chips. This logic may help in evacuating the drill chips for the vacuum system (not shown). Too large of a chip cannot be removed by a normal vacuuming operation. The tool may be used with any dynamoelectric machine, including, but not limited to compressors, gas turbines or steam turbines.

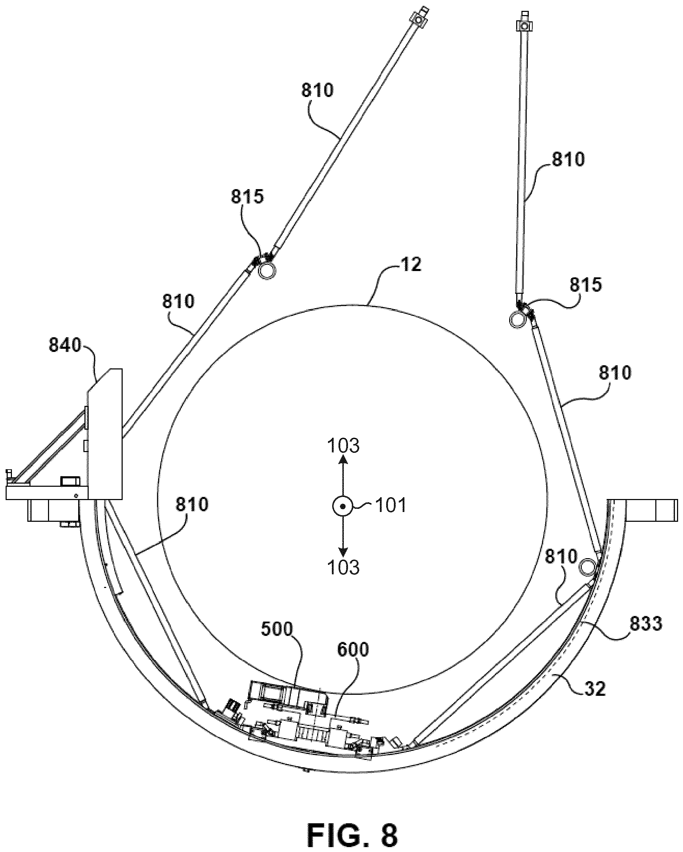

FIG. 8 illustrates a cross-sectional view of the tool 500 and skid 600 deployed under a rotor 12 in a compressor. The lower casing half 32 of the compressor contains a series of hook fit slots 833. The drill unit skid 600 slides or navigates along the hook fit slot 833 and may be positioned at any desired location beneath rotor 12. One or more extension arms 810 can be linked together with one or more couplings 815, and the arms 810 are connected to drill unit skid 600. The arms 810 can be manually manipulated to position the drill 500 and skid 600, or the arms can be moved or controlled with the assistance of a machine and/or controller. A mounting fixture 840 is installed on the lower casing half 32 to facilitate the guiding of the drill unit skid 600 into the hook fit slot 833.

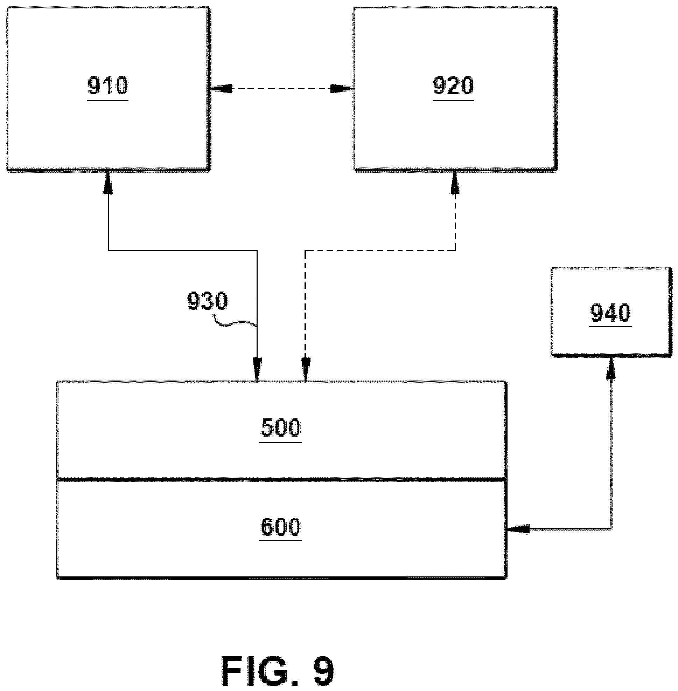

FIG. 9 illustrates a power and control system that may be used with drill 500 and/or drill unit skid 600. A power source or supply 910 is connected to tools 500 and/or 600 via connection lines 930. The power supply may include electrical power (e.g., AC and/or DC power), pneumatic power (e.g., compressed air), hydraulic power or any other suitable power source. The connection lines 930 may be any suitable device for the transmission of the power (e.g., conductive cables/wires, compressed air hoses/lines, etc.). A control system 920 may be used to control and/or actuate the power supply 910 and/or tools 500, 600, cutting tool 530, and may comprise computer control devices or manual control devices). In one example, the control device could be a laptop computer having a graphic interface allowing an operator to control the work process. In another example, the control device may be a simple set of manually operated switches or levers that activate or deactivate various features of the power supply 910 and/or tools 500, 600. The control system 920 may be connected to the power source 910 and/or the tools 500, 600 via any suitable communication medium (e.g., wired or wireless communication lines, cables, etc.). A vacuum system 940 may be connected to drill unit skid 600 or drill 500 to aid in the removal of cutting debris.

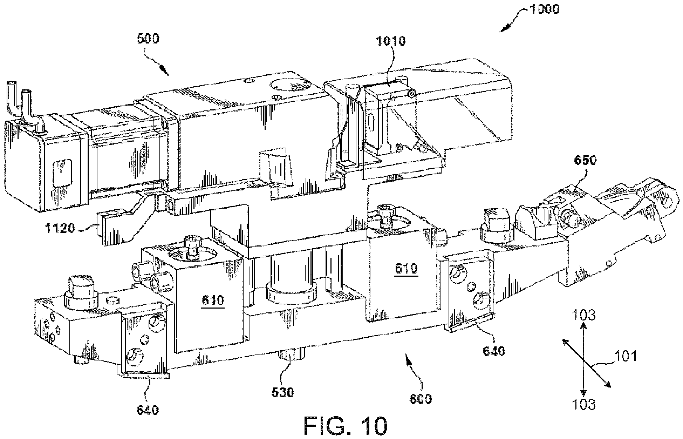

FIG. 10 illustrates a perspective view of the tool 1000, according to an aspect of the present invention. The tool 1000 includes a laser positioning device 1010 which may be mounted to the drill unit skid 600. The laser positioning device 1010 is configured to detect the position of the cutting tool 530 and provides feedback to an operator via control system 920. During a drilling, tapping, and back spot facing operation, the laser positioning device 1010 monitors and detects movement of the drill 500 and cutting tool 530. The control system 920 is programmed to stop the cutting tool 530 when the laser positioning device 1010 indicates that a predetermined depth has been reached. This is an important feature, as it is important to prevent over-drilling damage to the tapped hole and damage to the drill's spindle.

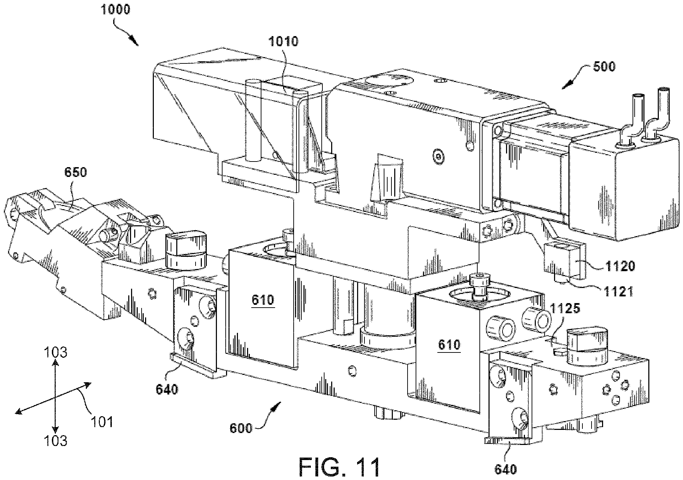

FIG. 11 illustrates a perspective view of the tool 1000, according to an aspect of the present invention. The tool 1000 includes a micro switch 1120 which may be mounted to the drill unit skid 600. The micro switch 1120 is configured to stop the servo motor cutting device 500 and cutting tool 530 when the micro switch 1120 activates. For example, as the servo motor cutting device (or drill) 500 travels downward during a drilling, tapping, or back spot facing operation the micro switch will physically contact platform 1125 on drill unit skid 600. When this happens, the button 1121 is depressed and the switch activates, and the micro switch 1120 is configured to transmit a signal to the control system 920. Based on this signal, the control system 920 stops the servo motor cutting device 500 and cutting tool 530. The micro switch 1120 may act as a fail-safe device in the event of errors in the programming of control system 920 or failure of laser positioning device 1010. The micro switch 1120 may also be a proximity switch, magnetic switch, optical switch or any other suitable switching device.

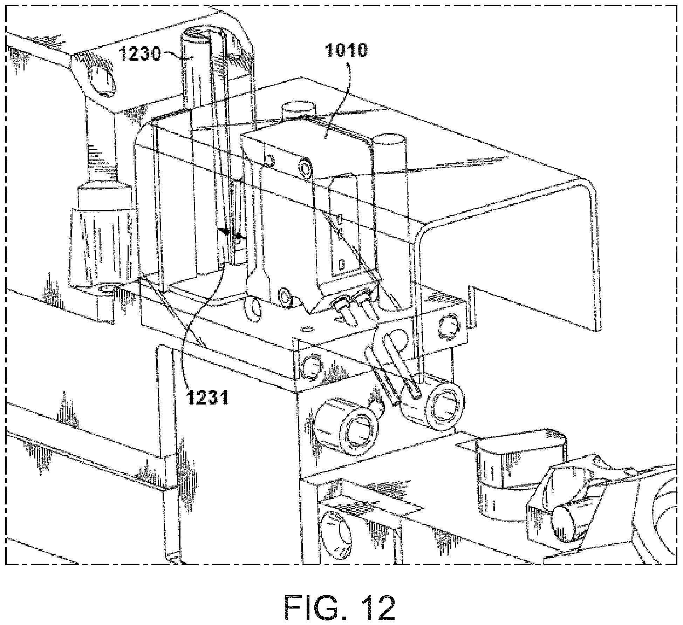

FIG. 12 illustrates an enlarged perspective view of laser positioning device 1010, according to an aspect of the present invention. The servo motor cutting device 500 is attached to a ramped guide shaft 1230. The ramped guide shaft includes a ramped section or surface 1231. During a drilling, tapping, or back spot facing operation, as the drill 500 travels downward, the ramped guide shaft also travels downward. The distance between the ramped surface 1231 and the laser positioning device 1010 changes during travel of the drill 500. For example, as the drill 500 travels downward the distance between the ramped surface 1231 and the laser positioning device 1010 decreases. This decrease in distance is detected by the laser positioning device 1010 and is reported back to control system 920. The control system 920 (or laser positioning device 1010) can be programmed to translate the sensed distance between the ramped surface 1231 and the laser positioning device 1010 to radial movement of the servo motor cutting device 500 and/or cutting tool 530.

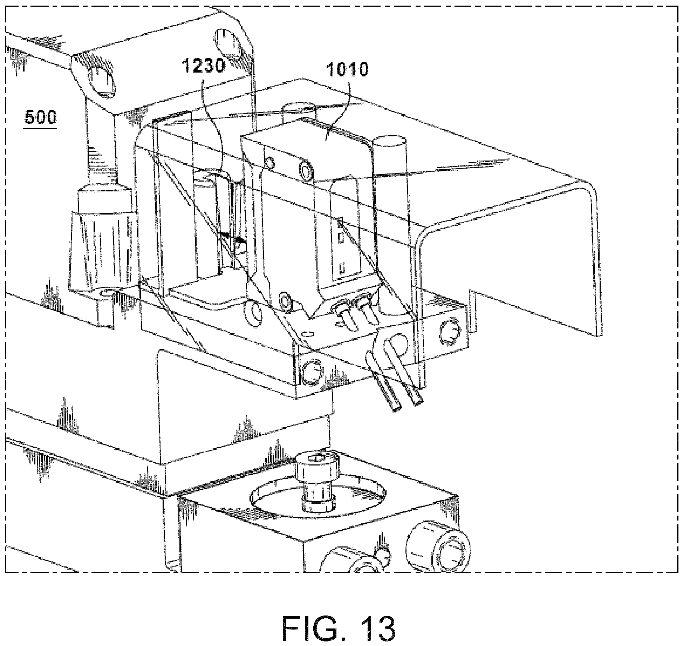

FIG. 13 illustrates an enlarged perspective view of laser positioning device 1010, where the servo motor cutting device 500 is raised radially upward. In this example position, the distance between the ramped surface 1231 and the laser positioning device 1010 has increased relative to the example shown in FIG. 12. The servo motor cutting device 500 is also higher relative to the drill unit skid 600.

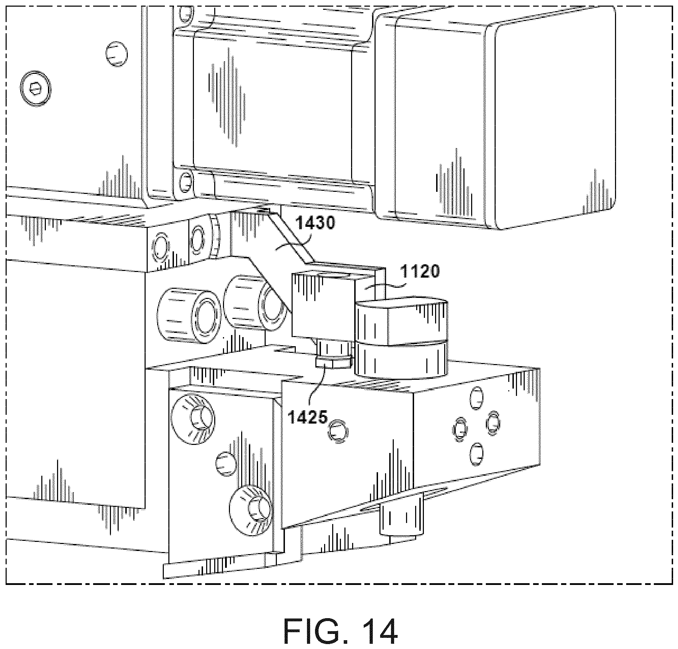

FIG. 14 illustrates an enlarged perspective view of micro switch 1120 in an activated position. In this example, the servo motor cutting device 500 has reached its downward most desired position. At this position, the micro switch 1120 contacts a button 1425 and activates, thereby signaling control system 920 to stop operation of the servo motor cutting device 500 and cutting tool 530. The button 1425 may be the hex bolt head of a fastener or alternatively platform surface 1125. On advantage to using a hex bolt (or any other suitable fastener) is that the stop distance or position may be adjusted for different applications. The micro switch 1120 may be attached to the drill unit skid 600 or drill 500 by bracket 1430, or any other suitable means.

The drilling, tapping, and back spot facing method or process, according to aspects of the present invention, begins with a step of installing a mounting fixture 840 on the side horizontal joint of the lower casing half 32 utilizing an alignment block between the fixture and the hook fit slot 833 of the lower casing half 32. This aligns the drill unit skid 600 and the hook fit 833 to facilitate the feeding of the drill unit skid 600 into the "T" slot or hook fit 833 of the compressor case 32. Additionally, the mounting fixture sets the positioning of all holes (e.g., eight) that will be drilling into each half of the case during the process. The fixture does this by utilizing a hole that is located in the base of the fixture. This hole is used to define the location of the first hole to be drilled. Each subsequent hole will be based off of this first hole location. The tool 1000 may now be inserted into the mounting fixture 840 and subsequently into the hook fit slot 833. This is achieved by actuating a shot pin, on the drill unit skid 600, into the hole in the mounting fixture. The shot pin locates the position of the drill unit (or tool 1000) circumferentially to the hole being worked and the clamping cylinders provide an upward force to hold the tool 1000 in position in the hook fit during all operations (drilling the holes, back spot facing and tapping) during the process. The actuation of the shot pin locate the tool 1000 circumferentially with respect to the lower casing half 32.

Prior to mounting the tool 1000 on the fixture a bit is installed into the drill 500. This bit is custom due to the length and machining necessary to lock into the bit chuck. Once installed, the unit is stroked for forward and reverse movement and rotation. Once proven, it is positioned on the mounting fixture. The fixture is equipped with a lock to suspend the drill 500 prior to feeding it into the machine. This lock is utilized for a couple of reasons. The drill 500 may be heavy and by suspending it in this position it makes tool change over easier for the operator.

The operator unlocks and slides the tool 1000 into the hook fit and actuates the shot pin to locate the unit for the first hole position. The shot pin locates the tool 1000 by utilizing the hole located in the base of the drill mount. Once in the locating hole the operator actuates the hydraulic clamps to hold the tool 1000 against the bottom side of the hook fit. The clamp is configured to secure the tool 1000 to the hook fit slot 833. This helps to ensure the tool 1000 does not slide or move during the drilling, spot facing and tapping operations. Once the tool 1000 is locked into position the operator can choose the function from the pendant that they want to perform. The operator can choose, drill, spot face or tap, advance and retract depending on what operation is needed. The first operation is drilling one of the holes. The operator drills the first hole and then uses this hole to locate the position of the next. This drilling operation is repeated until all eight holes have been drilled. Obviously, any number of holes may be drilled and more or less than eight holes could be chosen, based on the specific application.

Once all holes have been drilled the drill unit 500 can be removed and the operator may select the spot face operation on the pendant. The split arbor is installed for the back spot facing operation. The arbor is split due to the limited amount of stroke range of the drilling unit. The first half of the split arbor is locked into the drill and the unit is fed into the hook fit 833 the same way as during the drilling operation. Once the tool 1000 is at the first hole location and locked into place the drill 500 is stroked or advanced to the full stroke so that the second half of the arbor can be attached. This is achieved by feeding the second half of the arbor through the hole that was previously drilled. Once in place the arbor is tightened using a cap screw. Next, the back spot face cutter is attached to the arbor. This arbor cutter arrangement is designed so that when the cutter is rotating (cutting) the rotational direction keeps it locked into position. A spot facing of the hole is now performed. The drill 500 is retracted to the "fully" retracted position. This is what sets the depth of the spot face drilling operation. When the unit is fully retracted the spot face is set to the correct depth. This is an important depth since this surface sets the location of the load pin and the load pin to stator blade relationship. The drill 500 is then advanced full stroke and the spot face cutter and arbor are removed. The tool 1000 is then unclamped and moved to the next hole location. This process can be repeated until all holes have been spot faced. Once all holes are spot faced the tool 1000 may be removed from the machine for a tooling change.

The next operation is the tapping of the holes. The operator selects the tapping operation on the pendant. The custom tap is loaded and locked into the drilling unit while the drill 500 is suspended on the mounting fixture 840. The tap is designed to fit into the chuck and it pushes the tapping chips forward unlike a conventional tap. The drill 500 is then fed into the machine and is advanced to the last (e.g., eighth) hole location to start the tapping process. The tapping operation is started at the last hole due to the shot pin requiring an untapped or smooth hole to locate from during the process. The tapping operation starts with the last hole and works backwards towards the first hole. Once the last hole is tapped the tool 1000 is pulled back to tap the next (e.g., seventh) hole. This is repeated until all holes have been tapped. The tool 1000 is then disassembled and mounted on the upper half casing where all operations can be repeated. In addition, the method may include the step monitoring a depth of a cutting operation with a laser positioning device 1010 and controlling operation of the tool 1000 based on the depth. The method may also include the step of monitoring a depth of a cutting operation with a micro switch 1120 and controlling operation of the tool 1000 based on activation of the micro switch 1120.

It will be appreciated that the removal of the upper casing half of the compressor to add, repair, upgrade or perform the above described drilling, tapping, and back spot facing method on the compressor does not require the removal of the rotor 12 from the lower casing half 32. This enables the compressor to be modified by the above described drilling, tapping, and back spot facing method in the field or in situ.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following clauses:
1. A tool for drilling, tapping, and back spot facing at least one hole in a turbomachine, the tool comprising:
   a servo motor cutting device configured for use with a cutting tool;
   a drill unit skid adapted to engage a hook fit slot in a case of the turbomachine and for supporting the servo motor cutting device, the drill unit skid including hook fit slides, the hook fit slides configured to guide the drill unit skid along the hook fit slot and act as a stop in a radial direction with respect to the turbomachine;
   a laser positioning device configured to detect the position of the cutting tool;
   a micro switch configured to stop the servo motor cutting device when the micro switch activates; and
   wherein the servo motor cutting device rotates the cutting tool to create the at least one hole, and wherein a rotor of the turbomachine is left in place during drilling, tapping and back spot facing.
2. The tool of clause 1, wherein the laser positioning device is configured to transmit information to a control system, and based on this information the control system controls operation of the servo motor cutting device.
3. The tool of clause 1, wherein the micro switch is configured to transmit a signal to a control system, and based on this signal the control system stops the servo motor cutting device.
4. The tool of clause 1, further comprising:
   a ramped guide shaft attached to the servo motor cutting device, the ramped guide shaft including a ramped section configured for use with the laser positioning device; and
   wherein a translation of a distance between the ramped section and the laser positioning device relates to radial movement of the servo motor cutting device.
5. The tool of clause 1, wherein the micro switch is mounted to the drill unit skid, and the micro switch is configured to stop the servo motor cutting device and cutting tool when the micro switch contacts a fastener head.
6. The tool of clause 1, the hook fit slides configured to act as stops in two opposing radial directions with respect to the turbomachine.
7. A tool for drilling, tapping, and back spot facing at least one hole in a turbomachine, the tool comprising:
   a servo motor cutting device configured for use with a cutting tool;
   a drill unit skid adapted to engage a hook fit slot in a case of the turbomachine and for supporting the servo motor cutting device, the drill unit skid including hook fit slides, the hook fit slides configured to guide the drill unit skid along the hook fit slot and act as a stop in a radial direction;
   a laser positioning device configured to detect the position of the cutting tool;
   wherein the servo motor cutting device rotates the cutting tool to create the at least one hole, and wherein a rotor of the dynamoelectric machine is left in place during drilling, tapping and back spot facing.
8. The tool of clause 7, the hook fit slides configured to act as stops in two opposing radial directions with respect to the turbomachine.
9. The tool of clause 8, further comprising:
   a micro switch configured to stop rotation of the servo motor cutting device when the micro switch activates.
10. The tool of clause 9, wherein the micro switch is configured to transmit a signal to a control system, and based on this signal the control system stops the servo motor cutting device.
11. The tool of clause 9, wherein the laser positioning device is configured to transmit information to a control system, and based on this information the control system controls operation of the servo motor cutting device.
12. The tool of clause 11, further comprising:
   a ramped guide shaft attached to the servo motor cutting device, the ramped guide shaft including a ramped surface configured for use with the laser positioning device; and
   wherein a translation of a distance between the ramped surface and the laser positioning device relates to radial movement of the servo motor cutting device.
13. The tool of clause 12, wherein the micro switch is mounted to the drill unit skid, and the micro switch is configured to stop the servo motor cutting device and cutting tool when the micro switch contacts a fastener head.
14. A tool for drilling, tapping, and back spot facing at least one hole in a turbomachine, the tool comprising:
   a servo motor cutting device configured for use with a cutting tool;
   a drill unit skid adapted to engage a hook fit slot in a case of the turbomachine and for supporting the servo motor cutting device, the drill unit skid including hook fit slides, the hook fit slides configured to guide the drill unit skid along the hook fit slot and act as a stop in a radial direction;
   a micro switch configured to stop the servo motor cutting device when the micro switch activates;
   wherein the servo motor cutting device rotates the cutting tool to create the at least one hole, and wherein a rotor of the turbomachine is left in place during drilling, tapping and back spot facing.
15. The tool of clause 14, the hook fit slides configured to act as stops in two opposing radial directions with respect to the turbomachine.
16. The tool of clause 15, further comprising:
   a laser positioning device, the laser positioning device configured to detect the position of the cutting tool.
17. The tool of clause 16, wherein the laser positioning device is configured to transmit information to a control system, and based on this information the control system controls operation of the servo motor cutting device.
18. The tool of clause 17, wherein the micro switch is configured to transmit a signal to a control system, and based on this signal the control system stops the servo motor cutting device.
19. The tool of clause 18, further comprising:
   a ramped guide shaft attached to the servo motor cutting device, the ramped guide shaft including a ramped surface configured for use with the laser positioning device; and
   wherein a translation of a distance between the ramped surface and the laser positioning device relates to radial movement of the servo motor cutting device.
20. The tool of clause 19, wherein the micro switch is mounted to the drill unit skid, and the micro switch is configured to stop the servo motor cutting device and cutting tool when the micro switch contacts a fastener head.

## Claims

1. A tool (1000) for drilling, tapping, and back spot facing at least one hole in a turbomachine, the tool (1000) comprising:
a servo motor cutting device (500) configured for use with a cutting tool (530);
a drill unit skid (600) adapted to engage a hook fit slot (833) in a case of the turbomachine and for supporting the servo motor cutting device (500), the drill unit skid (600) including hook fit slides (640), the hook fit slides (640) configured to guide the drill unit skid (600) along the hook fit slot (833) and act as a stop in a radial direction (103) with respect to the turbomachine;
a laser positioning device (1010) configured to detect the position of the cutting tool (530);
a micro switch (1120) configured to stop the servo motor cutting device (500) when the micro switch (1120) activates; and
wherein the servo motor cutting device (500) rotates the cutting tool (530) to create the at least one hole, and wherein a rotor (12) of the turbomachine is left in place during drilling, tapping and back spot facing.

2. The tool (1000) of claim 1, wherein the laser positioning device (1010) is configured to transmit information to a control system (920), and based on this information the control system (920) controls operation of the servo motor cutting device (500).

3. The tool (1000) of claim 1 or claim 2, wherein the micro switch (1120) is configured to transmit a signal to a control system (920), and based on this signal the control system (920) stops the servo motor cutting device (500).

4. The tool (1000) of any preceding claim, further comprising:
a ramped guide shaft (1230) attached to the servo motor cutting device (500), the ramped guide shaft (1230) including a ramped section (1231) configured for use with the laser positioning device (1010); and
wherein a translation of a distance between the ramped section (1231) and the laser positioning device (1010) relates to radial movement of the servo motor cutting device (500).

5. The tool (1000) of any preceding claim, wherein the micro switch (1120) is mounted to the drill unit skid (600), and the micro switch (1120) is configured to stop the servo motor cutting device (500) and cutting tool (530) when the micro switch (1120) contacts a fastener head.

6. The tool (1000) of any preceding claim, the hook fit slides (640) configured to act as stops in two opposing radial directions (103) with respect to the turbomachine.

7. A tool (1000) for drilling, tapping, and back spot facing at least one hole in a turbomachine, the tool (1000) comprising:
a servo motor cutting device (500) configured for use with a cutting tool (530);
a drill unit skid (600) adapted to engage a hook fit slot (833) in a case of the turbomachine and for supporting the servo motor cutting device (500), the drill unit skid (600) including hook fit slides (640), the hook fit slides (640) configured to guide the drill unit skid (600) along the hook fit slot (833) and act as a stop in a radial direction (103);
a laser positioning device (1010) configured to detect the position of the cutting tool (530);
wherein the servo motor cutting device (500) rotates the cutting tool (530) to create the at least one hole, and wherein a rotor (12) of the dynamoelectric machine is left in place during drilling, tapping and back spot facing.

8. The tool (1000) of claim 7, the hook fit slides (640) configured to act as stops in two opposing radial direction (103) with respect to the turbomachine.

9. The tool (1000) of claim 7 or claim 8, further comprising:
a micro switch (1120) configured to stop rotation of the servo motor cutting device (500) when the micro switch (1120) activates.

10. The tool (1000) of claim 9, wherein the micro switch (1120) is configured to transmit a signal to a control system (920), and based on this signal the control system (920) stops the servo motor cutting device (500).

11. A tool (1000) for drilling, tapping, and back spot facing at least one hole in a turbomachine, the tool (1000) comprising:
a servo motor cutting device (500) configured for use with a cutting tool (530);
a drill unit skid (600) adapted to engage a hook fit slot (833) in a case of the turbomachine and for supporting the servo motor cutting device (500), the drill unit skid (600) including hook fit slides (640), the hook fit slides (640) configured to guide the drill unit skid (600) along the hook fit slot (833) and act as a stop in a radial direction (103);
a micro switch (1120) configured to stop the servo motor cutting device (500) when the micro switch (1120) activates;
wherein the servo motor cutting device (500) rotates the cutting tool (530) to create the at least one hole, and wherein a rotor (12) of the turbomachine is left in place during drilling, tapping and back spot facing.

12. The tool (1000) of claim 11, the hook fit slides (640) configured to act as stops in two opposing radial direction (103) with respect to the turbomachine.

13. The tool (1000) of claim 11 or claim 12, further comprising:
a laser positioning device (1010), the laser positioning device (1010) configured to detect the position of the cutting tool (530).

14. The tool (1000) of claim 13, wherein the laser positioning device (1010) is configured to transmit information to a control system (920), and based on this information the control system (920) controls operation of the servo motor cutting device (500).

15. The tool (1000) of claim 14, wherein the micro switch (1120) is configured to transmit a signal to a control system (920), and based on this signal the control system (920) stops the servo motor cutting device (500).
